# EUROPÄISCHE PATENTANMELDUNG

(11) **EP 0 930 126 A1**
(43) Veröffentlichungstag der Anmeldung: **21.07.1999**
(21) Anmeldenummer: 99100351.8
(22) Anmeldetag: 14.01.1999
(51) Int. Cl.: B23K 26/00

(54) **Verfahren zur Abtragung von Oberflächenschichten mittels deckschichtenverstärkter laserinduzierter Schockwellen**

(30) Priorität: 14.01.1998 DE 19801013
(71) Anmelder: FRAUNHOFER-GESELLSCHAFT ZUR FÖRDERUNG DER ANGEWANDTEN FORSCHUNG E.V., 80636 München (DE)
(72) Erfinder: Wissenbach, Konrad, Dr., 52134 Herzogenrath (DE); Maischner, Dora, 52066 Aachen (DE); Lenzner, Mike, 52074 Aachen (DE)

(57) **Zusammenfassung**

Die Erfindung betrifft ein Verfahren zum Abtragen beliebiger Oberflächenschichten von einem Grundwerkstoff bei welchem der Grundwerkstoff nicht beschädigt wird und welches möglichst von der Verdampfungstemperatur der zu entfernenden Oberflächenschicht unabhängig ist. Bei dem Verfahren wird der zu reinigende Werkstoff mit einer für Laserlicht durchsichtigen Deckschicht wie zum Beispiel Wasser beaufschlagt, so daß bei Bestrahlung mit Laserpulsen sehr kurzer Pulsanstiegszeit Schockwellen induziert werden die zur Abtragung der Oberflächenschicht führen. Das Verfahren kann insbesondere für die Abtragung metallischer Werkstoffe, Keramiken, Verbundwerkstoffe und Hartstoffe eingesetzt werden.

## Beschreibung

### Technisches Gebiet

Die Erfindung betrifft ein Verfahren zur Abtragung von Oberflächenschichten, insbesondere metallischer Werkstoffe, Keramiken, Verbundwerkstoffe und Hartstoffe, von einem Grundwerkstoff mittels laserinduzierter Schockwellen, wobei die Oberflächenschicht mit einer für das Laserlicht durchsichtigen Deckschicht beaufschlagt ist. Bei den Verbundwerkstoffen seien im besonderen Schichten aus keramischen und metallischen Phasen (Cermets) wie z.B. Wolframcarbid in einer Kobalt-Matrix genannt. Typische Beispiele von Hartstoffschichten sind TiN, SiC und Al₂O₃. Die metallischen Werkstoffe beinhalten alle Metalle und Metallegierungen sowie Metalloxide. Bevorzugtes Anwendungsgebiet der Erfindung ist der Abtrag einer Aluminiumschicht, die an der Oberfläche auch oxidiert sein kann, von einem Grundwerkstoff aus Chrom.

### Stand der Technik

Nach dem allgemeinen Stand der Technik lassen sich beliebige Oberflächenschichten, insbesondere metallische Oberflächenschichten, bei einer Vielzahl von Schicht-Grundwerkstoffkombinationen, wirtschaftlich nur mechanisch von einem Grundwerkstoff abtragen. So erfolgt zum Beispiel die Abtragung von an der Oberfläche oxidiertem Aluminium von einer Chromoberfläche mittels Abschleifen oder Abkratzen. Zudem ist trotz angewandter Sorgfalt beim mechanischen Bearbeitungsverfahren eine Beschädigung des Grundwerkstoffs nicht ausgeschlossen, so daß die Abtragung gegebenenfalls nicht mehr von Interesse ist oder aber der Grundwerkstoff in einem nachgeschalteten Arbeitsschritt einer Nacharbeitung bedarf.

Zur Verringerung dieser Nachteile wurde versucht, Oberflächenschichten mittels Laserstrahlen abzutragen. US 4.756.765 offenbart die Abtragung von Oberflächenschichten mittels gepulster Laserstrahlung. Die zu entfernenden Materialien, wie zum Beispiel Farben, Fette oder Keramiken besitzen eine geringe thermische Leitfähigkeit und werden durch die Laserstrahlung verdampft. Hierfür muß pro Puls eine hohe mittlere Energie in die zu entfernende Schicht deponiert werden. Die Energiedichten liegen typischerweise zwischen 2 J/cm² und 100 J/cm², die Pulslänge beträgt mindestens 3 Mikrosekunden. Wegen der sich deshalb ausbildenden hohen lokalen Temperaturen ist zudem eine Beschädigung des Grundwerkstoffs nicht ausgeschlossen, insbesondere wenn dieser eine Verdampfungstemperatur besitzt, welche kleiner als das Material der Oberflächenschicht ist. Zu analogen Nachteilen führt das Laserverfahren der internationalen Patentanmeldung WO-83/01400 das im selben Parameterbereich arbeitet und mit dem Schiffsrümpfe gereinigt werden. Hier wird vorzugsweise mit einem CO₂-Laser oder einem Nd:YAG-Laser gearbeitet und die Energiedichte beträgt ca. 20 J/cm².

Desweiteren ist in DE 69016051 T2 eine Möglichkeit zur Entfernung von Oberflächenschichten dokumentiert, bei der laserinduzierte Schockwellen eingesetzt werden. Dabei wird der gepulste Laserstrahl mit hohen Impulsleistungsdichten zwischen einigen Hundert Kilowatt pro cm² und einer zweistelligen Megawattzahl pro cm² direkt auf die zu entfernende Oberflächenschicht gerichtet. Dieses Verfahren läßt sich bei der Säuberung von Denkmälern oder Kunstgegenständen anwenden und beruht maßgeblich auf dem Einsatz von Laserimpulsen mit hoher Momentanleistung, deren Werte über eine Variation der Impulsdauer gesteuert werden. Die Anwendbarkeit ist jedoch verfahrensbedingt auf das Reinigen von Staub- und Fettschichten beschränkt; ein Abtrag beliebiger, insbesondere metallischer Schichten mit Dicken bis in den Millimeterbereich ist nicht möglich. Da bei diesem Verfahren die Oberfläche lückenlos und zum Teil auch mehrfach bestrahlt werden muß und zudem der Strahldurchmesser auf dem Werkstück im Millimeterbereich liegt, werden vergleichsweise geringe Flächenraten von maximal 1 m²/h erzielt. Gleiche Nachteile weist die im Artikel von Maravelaki, P. (u.a.): Cleaning with laser radiation on istria stone" in Mat. Res. Soc. Symp. Proc. Vol. 267, Seiten 955-961, veröffentlichte Lösung auf, mit der mit weitgehend zur DE 69016051 T2 identischen Lösung Baudenkmäler gereinigt werden sollen. Die geringen Flächenraten, die Einschränkung des Verfahrens bzgl. Art und Dicke der abtragbaren Schichten sowie der Umstand, daß die dabei verwendeten Strahlquellen hohe Kosten verursachen, verhinderte bisher den industriellen Einsatz.

In Tam, A.C. (u.a.):Laser-cleaning techniques for removal of surface particulates, J. Appl. Phys. 71, 1992, H.7, Seiten 3515-3523, wird beschrieben, wie mit laserinduzierten Schockwellen einzelne Partikel von einem mit einem Flüssigkeitsfilm bedeckten Substrat entfernt werden können. Die Laserpulse sind dabei so gewählt, daß der Flüssigkeitsfilm die Lichtenergie stark absorbiert und als Folge explosionsartig verdampft wird wobei die Partikel mitgerissen werden. Nachteilig bei dieser Lösung ist, daß sie sich auf flächig zusammenhängende Schichten nicht anwenden läßt, da bei Schichten beliebiger Art und Ausdehnung die Kraft zur Ablösung vom Substrat zu gering ist

### Darstellung der Erfindung

Der Erfindung liegt die Aufgabe zugrunde, ein universelles Verfahren zum Abtragen beliebiger Oberflächenschichten zu schaffen, bei welchem der Grundwerkstoff nicht beschädigt wird, welches möglichst von der Verdampfungstemperatur der zu entfernenden Oberflächenschicht unabhängig ist, und das ebenfalls vorteilhaft industriell einsetzbar ist.

Diese Aufgaben werden erfindungsgemäß durch die im Anspruch 1 gegebenen Merkmale gelöst. Vorteilhafte Ausgestaltungen für die Durchführung des Verfahrens sind in den Unteransprüchen 2-19 angegeben.

Erfindungsgemäß wird der von einer Oberflächenschicht zu reinigende Grundwerkstoff zusätzlich mit einer für die Laserstrahlung durchsichtigen Deckschicht beaufschlagt. Bei einer flüssigen Deckschicht kann dies zum Beispiel dadurch geschehen, daß diese Flüssigkeit der Oberfläche des Werkstücks kontinuierlich mit einer Düse zugeführt wird.

Die Laserparameter sind so zu wählen, daß die Deckschicht für das Laserlicht durchsichtig ist, d.h. daß das Laserlicht mit nur vernachlässigbarer Absorption durch die Deckschicht zu propagieren vermag. Als vorteilhaft hat es sich daher erwiesen, für das Verfahren gepulstes Laserlicht mit einer sehr kurzen Pulsanstiegszeit einzusetzen, die vorteilhafterweise unter zehn und noch besser unter fünf Nanosekunden liegt.

Die übrigen Laserlichtparamter sind so zu wählen, daß das Laserlicht im Grenzbereich zwischen Deckschicht und Oberflächenschicht den äußersten Rand der zu entfernenden Oberflächenschicht schlagartig zu verdampfen vermag. Werden hierfür die Laserparameter richtig gewählt, so kommt es wegen des Verdampfens dieses äußersten Randes der zu entfernenden Oberflächenschicht zur Ausbildung eines Plasmas hohen Drucks - im GPa-Bereich - und hoher Temperatur - im Bereich von 10.000 K._Der hohe Druck induziert im Grenzbereich zwischen Deckschicht und Oberflächenschicht eine mechanische Druck- bzw. Schockwelle welche in die Oberflächenschicht eingekoppelt wird, und welche maßgeblich für die Ablation verantwortlich ist. Die Schockwelle führt zunächst zu mechanischen Spannungen in der Oberflächenschicht, dadurch zu Rissen in der Oberflächenschicht, und nachfolgend zu deren schollenartigen Abplatzen. Die thermische Beeinflussung des Werkstücks kann dabei vernachlässigt werden, da diese in der Regel auf die Randschicht der zu entfernenden Oberflächenschicht begrenzt ist.

Als gut geeignetes Laserlicht für die Ausbildung starker laserinduzierter Schockwellen mit nachfolgend guter Ablation der Oberflächenschicht hat sich Laserlicht mit einer Laserwellenlänge im Bereich oder unter 1060 nm erwiesen, wobei die Impulsleistung vorzugsweise im zwei- bis dreistelligen Megawattbereich liegt. Das Laserlicht wird mittels geeigneter Optiken auf wenige Quadratmillimeter fokussiert und auf das Werkstück gerichtet, woraus sich Impulsleistungsdichten 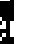 ergeben, die vorteilhafterweise zwischen 10⁸ W/cm² und 10¹⁰ W/cm² und maximal im Gigawattbereich pro cm² liegen.

Als Grundwerkstoff kommen prinzipiell alle Werkstoffe in Frage. Besonders fehlertolerant erwiesen sich in Versuchen Materialien mit hohen Verdampfungstemperaturen, zum Beispiel Metalle, und besonders Chrom.

Die Deckschichtenmaterialien können fest oder flüssig sein, und dürfen die verwendete Laserstrahlung nur sehr wenig absorbieren. Als geeignet hat sich zum einen Wasser herausgestellt, welches auch destilliertes Wasser sein kann, zum anderen Glas. Vorteilhafterweise beträgt die Dicke der verwendeten Deckschicht wenige zehntel und bis zu 3 mm. Für eine Deckschichtendicke außerhalb des genannten Bereichs steigt die Anzahl der für einen Abtrag notwendigen Pulse an bzw. es ist kein Abtrag der Oberflächenschicht möglich.

Als zu entfernende Materialien der Oberflächenschicht kommen beliebige Materialien in Frage, so zum Beispiel metallische Werkstoffe (z.B. Metalle, Metalloxide wie zum Beispiel an der Oberfläche oxidiertes Aluminium, oder Metallegierungen), Keramiken, Verbundwerkstoffe wie Wolframkarbid (WC), Hartstoffschichten (so z.B. Titannitrid (TN), Siliciumkarbid (SiC), oder Al₂O₃), Schichten aus keramischen und metallischen Phasen (Cermets) wie z.B. Wolframkarbid in einer Kobalt-Matrix. Auch andere Materialien mit ggf. hohen Verdampfungstemperaturen lassen sich wie beschrieben abtragen.

Von entscheidender Bedeutung ist beim erfindungsgemäßen Abtragungsverfahren mit laserinduzierten Schockwellen die Wahl einer Deckschicht in Kombination mit hinreichend kurzen Pulsanstiegszeiten. Zwar ist aus Grundlagenuntersuchungen bekannt (P. Peyre und R. Fabbro: 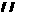 Laser shock processing: a review of the physics and applications", Optical and Quantum Electronics 27 (1995), 1213-1229), daß durch das Vorhandensein einer zusätzlichen Deckschicht eine laserinduzierte Schockwelle ausgebildet wird, deren Druckeinwirkzeit um den Faktor 2-3 verlängert und deren Druckamplitude um eine Größenordnung gegenüber dem Fall ohne Deckschicht erhöht wird. Die Ausnutzung dieses physikalischen Effektes für Abtragungszwecke ist jedoch erst dann möglich, wenn die Pulsanstiegszeit hinreichend kurz ist. Nur darüber ist die erforderliche schnelle Einkopplung der Energie in das Medium möglich, wird der dielektrische Durchbruch, bei dem die Deckschicht für das Laserlicht undurchlässig wird, verhindert, und setzt ein Ablationseffekt ein, der gegenüber einem Verfahren ohne Deckschicht deutlich verstärkt ist. Ohne eine hinreichend kurze Pulsanstiegszeit wird die Deckschicht für die Laserstrahlung undurchsichtig und es wird kein Abtragungseffekt erzielt.

Die Bearbeitung ist dabei nicht auf die oben beschriebenen Strahlquellen beschränkt. Tendenziell sind Strahlquellen mit kleinerer Wellenlänge noch besser für das erfindungsgemäße Verfahren geeignet, da der dielektrische Durchbruch für kleinere Wellenlängen zeitverzögert eintritt, und die erforderliche Absorption des Lichts durch das Material der Oberflächenschicht verbessert wird.

Für einen industriellen Einsatz ist es wichtig anzumerken, daß die Fläche des abgeplatzten Materials ein Mehrfaches der Querschnittsfläche des Laserstrahls auf der Werkstückoberfläche sein kann. Damit braucht die Oberfläche nicht lückenlos bestrahlt zu werden womit sich besonders große Flächenraten ergeben. Ausreichend ist es, den Laserstrahl und das Werkstück relativ zueinander zu bewegen bis der Laserstrahl wieder die zu entfernende Schicht trifft. Eine on-line Überwachung und Regelung des Bearbeitungsprozesses kann beispielsweise durch den Einsatz von optischen Meßsystemen erzielt werden. Dies kann durch Abstandsmessung mittels Lasertriangulation oder durch Messung des Reflexionsgrades der Oberfläche realisiert werden.

Zur Erhöhung der Bearbeitungsgeschwindigkeit kann das Abtragungsverfahren mit der Beaufschlagung von Ultraschall kombiniert werden. Der Ultraschall bewirkt dabei ein Abtragen der durch die Laserbehandlung bereits rißbehafteten Oberflächenschicht. Eine weitere Möglichkeit zur Erhöhung der Bearbeitungsgeschwindigkeit besteht darin, auf das Werkstück ein Kriechmittel wie zum Beispiel Kriechöl aufzutragen. Das Kriechmittel setzt sich infolge seiner geringen Oberflächenspannung in die bei der Laserbehandlung entstehenden Risse. Bei der Bestrahlung des Werkstückes kommt es zu einem explosionsartigen Verdampfen des Kriechmittels, was eine zusätzlich Kraft auf die Oberflächenschicht und damit eine Beschleunigung des Abtragungsprozesses bewirkt.

Ohne Einschränkung des allgemeinen Erfindungsgedankens soll das erfindungsgemäße Verfahren zum Abtragen beliebiger Oberflächenschichten von einem Grundwerkstoff und dessen Vorteile gegenüber dem Stand der Technik in einem Ausführungsbeispiel erläutert werden.

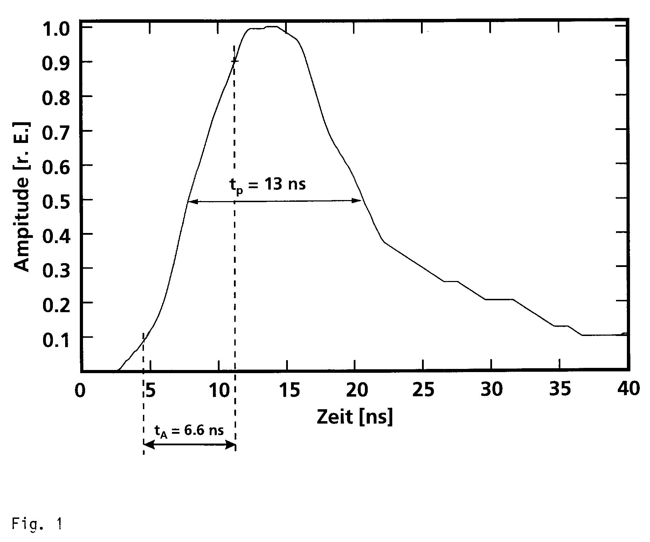

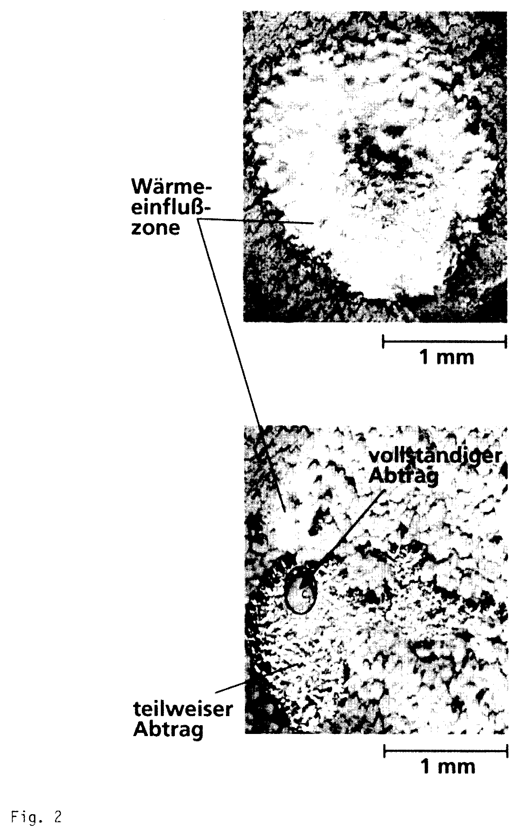

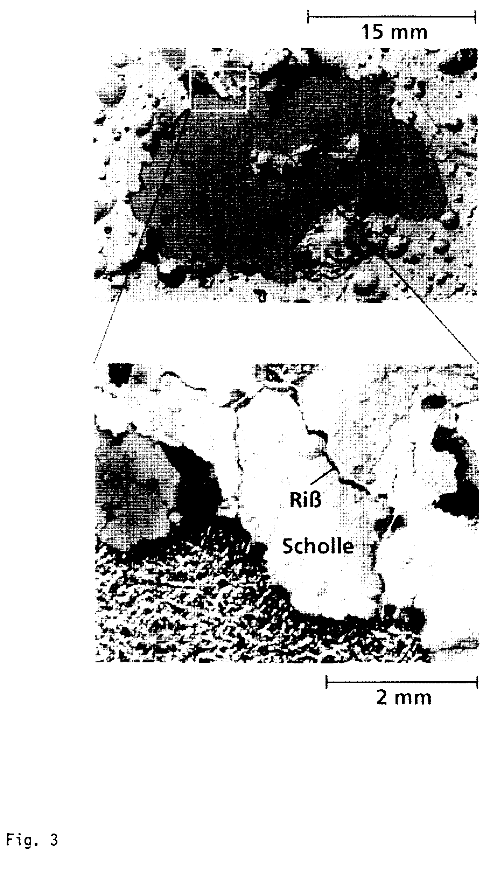

Das von einer Schicht aus oxidiertem Aluminium zu reinigende Werkstück aus Chrom wird zusätzlich mit einer Deckschicht aus destilliertem Wasser beaufschlagt. Dies geschieht dadurch, daß der Oberfläche des Werkstücks mit einer Düse kontinuierlich destilliertes Wasser zugeführt wird, so daß im Bearbeitungsbereich stets eine dünne Wasserdeckschicht auf dem Werkstück liegt. Die Dicke I der Deckschicht beträgt dabei 1 mm. Für eine Dicke der Wasserdeckschicht über 3 mm steigt die Anzahl der für einen Abtrag notwendigen Pulse an bzw. es ist kein Abtrag der Aluminiumschicht möglich. Strahlquelle ist ein Nd:YAG-Laser (λ = 1060 nm) mit einer maximalen Impulsleistung P_{P,max} von ca. 113 MW, einer maximalen Pulsenergie E_{P,max} von 1,34 J, einer Pulslänge t_{P} von 13 ns und einer Pulsanstiegszeit t_{A} von 6,6 ns. Den zeitlichen Verlauf der verwendeten Laserpulses zeigt Fig. 1. Der Strahl wird mittels einer Optik (Brennweite f=200 mm) auf ca. 1,1 Quadratmillimeter fokussiert, woraus sich eine Impulsleistungsdichte 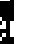 von ca. 7 *10⁹ W/cm² ergibt. Das für die Wasserdeckschicht durchsichtige gepulste Laserlicht verdampft nur die Randschicht der zu entfernenden Oberflächenschicht. Ein nennenswertes Verdampfen der Oberflächenschicht aus Aluminium ist wegen der hohen Verdampfungstemperatur von Al (T_{Verdampf} =2700 K) nicht möglich. Es entsteht ein Plasma mit hohem Druck und hoher Temperatur. Durch den hohen Druck wird eine mechanische Druckwelle induziert welche in die Oberflächenschicht eingekoppelt wird, und welche maßgeblich für die Ablation verantwortlich ist. Fig. 2 (oben) zeigt das Bearbeitungsergebnis ohne Deckschicht für den Fall einer ca. 0,1 mm dicken an der Oberfläche oxidierten Aluminiumschicht. Ein Teil des Werkstücks (zentraler Teil von Fig. 2 oben) wurde dabei mehrfach bestrahlt, ohne daß der Laserstrahl relativ zum Werkstück bewegt wurde (stationärer Betrieb). Die Laserleistung betrug hierbei P_{P}= 77 MW und die Impulsleistungsdichte 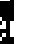 = 7 * 10¹³ W/m². Der bestrahlte Teil weist eine vermutlich durch thermische Effekte hervorgerufene Verfärbung auf, eine Abtragung der Oberflächenschicht ist jedoch nicht erfolgt. Aus der Pulsenergie (E_{P}=1 J) und der Strahlquerschnittsfläche (A=1,1 mm²) ergibt sich auf der Werkstückoberfläche eine Energiedichte von ca. 90 J/cm². Die bei diesem Ausführungsbeispiel verwendete Energiedichte liegt in dem von der DE 690 16 051 T2 genannten Bereich (ca. 60 J/cm²) für eine Abtragung ohne Deckschicht. Allerdings ist ohne Deckschicht eine nennenswerte Abtragung der Schicht auch nach 50 Laserpulsen nicht nachweisbar. Nach 50 Laserpulsen wird der Versuch eines Abtragung der Schicht als erfolglos abgebrochen. Wird bei gleichen Laserparametern eine 1 mm dicke Deckschicht aus destilliertem Wasser aufgebracht, so erfolgt bereits nach 3 Laserpulsen eine merkliche Abtragung wie Fig. 2 (unten) zeigt. Ursache ist die Erhöhung der Prozeßeffizienz durch Aufbringung der Deckschicht, in Kombination mit einer hinreichend kurzen Pulsanstiegszeit. Damit ist nachgewiesen, daß die in der DE 690 16 051 T2 vorgeschlagene Abtragung der Oberflächenschicht ohne Deckschicht auch bei kurzen Pulsanstiegszeiten fehlschlägt. Kurze Pulsanstiegszeiten bewirken nur in Kombination mit einer verwendeten Deckschicht einen Abtrag der Schicht. Bei Fig. 3 (oben) erfolgte ein flächiger Abtrag bei einer Impulsleistungsdichte 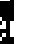 = 7 * 10¹³ W/m² bei einer Pulsenergie von E_{P}=1 J, wozu der Laserstrahl relativ zum Werkstück bewegt wurde. Der Strahldurchmesser betrug dabei d=1,2 mm und die Dicke der Oberflächenschicht bewegte sich zwischen 0,2 mm und 1 mm. Im zentralen Bereich wurde bereits die Schicht entfernt, während außerhalb die unebene Schicht verbleibt. Fig. 3 (unten) ist eine Ausschnittsvergrößerung, bei welcher im Randbereich die durch die Schockwelle hervorgerufenen Risse zu sehen sind welche die abplatzenden Schollen definieren, und welche bei weiterer Laserbestrahlung schollenartig abplatzen. Zur Veranschaulichung wurde die abplatzende Scholle durch eine Begrenzungslinie entlang des Risses hervorgehoben. Mikroskopische Untersuchungen des freigelegten Chroms zeigten, daß dieser nicht beschädigt wurde. Während der Laserstrahlbehandlung fiel ein Teil des abgetragenen Materials zurück auf die Werkstückoberfläche und wurde mittels Preßluft entfernt.

### Bezugszeichenliste

λ: Wellenlänge
tₚ: Pulslänge (Halbwertszeit)
t_{A}: Pulsanstiegszeit
P_{P}: Leistung des Laserpulses
E_{P} : Pulsenergie
d: Durchmesser des Strahls auf der Werkstückoberfläche
A: Strahlquerschnittsfläche auf der Werkstückoberfläche
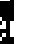 : Impulsleistungsdichte
n: Zahl der Pulse
s: Dicke der Oberflächenschicht
I: Dicke der Deckschicht

## Patentansprüche

1. Verfahren zum Abtragen beliebiger Oberflächenschichten von einem Grundwerkstoff, **dadurch gekennzeichnet**, daß die Oberflächenschicht mit einer für das Laserlicht durchsichtigen Deckschicht versehen wird, daß die Oberflächenschicht mit Laserpulsen sehr kurzer Anstiegszeit beaufschlagt wird, und daß laserinduzierte Schockwellen in der Oberflächenschicht bereitgestellt werden, die zu deren Abplatzen führen.

2. Verfahren nach Anspruch 1, **dadurch gekennzeichnet,** daß die Laserimpulse eine Anstiegszeit unter 10 ns aufweisen.

3. Verfahren nach Anspruch 2, **dadurch gekennzeichnet,** daß die Laserimpulse eine Anstiegszeit unter 5 ns aufweisen.

4. Verfahren nach mindestens einem der Ansprüche 1-3, **dadurch gekennzeichnet,** daß die Impulsleistung eine zwei- bis dreistellige Megawattzahl ist.

5. Verfahren nach mindestens einem der Ansprüche 1-4, **dadurch gekennzeichnet,** daß die Impulsleistungsdichte eine maximal dreistellige Gigawattzahl pro Quadratzentimeter aufweist.

6. Verfahren nach mindestens einem der Ansprüche 1-5, **dadurch gekennzeichnet,** daß auf die abzutragende Schicht eine feste oder flüssige für die Laserstrahlung durchsichtige Deckschicht gebracht wird.

7. Verfahren nach mindestens einem der Ansprüche 1-6, **dadurch gekennzeichnet**, daß die Deckschicht eine Dicke unter 3 mm aufweist.

8. Verfahren nach mindestens einem der Ansprüche 1-7, **dadurch gekennzeichnet**, daß die für das Laserlicht durchsichtige Deckschicht Wasser ist.

9. Verfahren nach Anspruch 8, **dadurch gekennzeichnet**, daß die für das Laserlicht durchsichtige Deckschicht destilliertes Wasser ist.

10. Verfahren nach Anspruch 9, **dadurch gekennzeichnet**, daß die Deckschicht eine Dicke von wenigen zehntel Millimeter und bis zu 3 mm aufweist.

11. Verfahren nach mindestens einem der Ansprüche 1-10, **dadurch gekennzeichnet**, daß die abzutragende Oberflächenschicht ein metallischer Werkstoff, eine Keramik, ein Verbundwerkstoff oder ein Hartstoff ist.

12. Verfahren nach Anspruch 11, **dadurch gekennzeichnet**, daß die abzutragende Oberflächenschicht ein Metall, eine Metallegierung, ein Metalloxid oder ein sonstiger metallischer Werkstoff ist.

13. Verfahren nach Anspruch 12, **dadurch gekennzeichnet**, daß die abzutragende Oberflächenschicht aus an der Oberfläche oxidiertem Aluminium besteht.

14. Verfahren nach Anspruch 11, **dadurch gekennzeichnet**, daß die abzutragende Oberflächenschicht eine Schicht aus keramischen und metallischen Phasen wie z.B. Wolframkarbid in einer Kobalt-Matrix ist.

15. Verfahren nach mindestens einem der Ansprüche 1-13, **dadurch gekennzeichnet,** daß die abzutragende Oberflächenschicht WC, TiN, SiC oder Al₂O₃ ist.

16. Verfahren nach mindestens einem der Ansprüche 1-15, **dadurch gekennzeichnet**, daß die Dicke der abzutragenden Oberflächenschicht im Bereich weniger zehntel Millimeter und bis in den Millimeterbereich liegt.

17. Verfahren nach mindestens einem der Ansprüche 1-16, **dadurch gekennzeichnet**, daß eine on-line Überwachung des Abtragungsprozesses durch Einsatz eines optischen Meßsystems erfolgt.

18. Verfahren nach mindestens einem der Ansprüche 1-17, **dadurch gekennzeichnet,** daß die Bearbeitungsgeschwindigkeit durch eine Kombination mit Ultraschallbeaufschlagung erhöht wird.

19. Verfahren nach einem der Ansprüche 1-18, **dadurch gekennzeichnet,** daß die Bearbeitungsgeschwindigkeit durch Auftragen eines Kriechmittels wie z.B. Kriechöl erhöht wird.
